# EUROPEAN PATENT APPLICATION

(11) **EP 4 570 560 A1**
(43) Date of publication of application: **18.06.2025**
(21) Application number: 23216039.0
(22) Date of filing: 12.12.2023
(51) Int. Cl.: B60L 1/00, B60L 53/20

(54) **AN ELECTRICAL POWER SUPPLY SYSTEM**

(71) Applicant: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: SORANI, Heza, 421 51 VÄSTRA FRÖLUNDA (SE); KELES, Nevzat, 417 24 GÖTEBORG (SE)
(74) Representative: Zacco Sweden AB

(57) **Abstract**

An electrical power supply system (6) for an electric vehicle comprising a first high-voltage battery (5) connected to a first inverter (7), which is connected to a first electric motor (4) of the vehicle. The first inverter is also connected to a primary side of a first multi-phase electrical transformer (14), and a secondary side (16) is connected to a first rectifier circuit (17) for outputting low-voltage DC electrical power. A first low-voltage battery (8) is connected to the first rectifier circuit (17) for charging of the first low-voltage battery (8), and the first rectifier circuit (17) and/or the first low-voltage battery (8) are configured to supply low-voltage DC electrical power to at least a first electrical load (L1, L2) of the vehicle.

## Description

### TECHNICAL FIELD

The present disclosure relates to an electrical power supply system for an electrical vehicle, as well as a method for operating an electrical vehicle. The electrical power supply system and associated method according to the disclosure will be described primarily in relation to an electric vehicle in form of car, but the high-voltage battery pack is not restricted to this particular type of vehicle, but may as well be installed or implemented in other types of vehicles, such as trucks, buses, rail vehicles, flying vehicles, marine vessels, off-road vehicles, mining vehicles, agriculture vehicles, working vehicles such as wheel loaders or excavators, forest vehicles such as harvesters or forwarders, motorcycles or the like.

### BACKGROUND

In most current type electrical vehicles, such as Battery Electrical Vehicles, Plug-in Hybrid Electrical Vehicles, Hybrid Electrical Vehicle, etc., the vehicle electrical power supply system includes a high-voltage side having a voltage level of for example about 300 - 900V combined with a low-voltage side having a voltage level of about 12-60 V, or a medium-voltage side having a voltage level of for example about 48-60V combined with a low-voltage side having a voltage level of about 12V. The conventional vehicle electrical power supply system typically also includes a DC/DC converter connecting the two voltage sides for enabling power transfer between said sides, in particular for transferring electrical power from the high-voltage side to the low-voltage side.

However, the DC/DC converter is inherently associated with energy losses and there is there is a continuous need for providing an improved vehicle electrical power supply system in terms of energy efficiency. Furthermore, high safety measures must be applied for ensuring that low-voltage side does not come in contact with high-voltage side.

### SUMMARY

Conventional electrical power supply systems for electrical vehicles typically include a high-voltage battery connected to a low-voltage battery via a non-isolated switched-mode DC/DC converter. However, switched-mode DC/DC converters are costly, they have significant energy losses during the conversion process, and they are generally non-isolated, meaning that the input side of the DC/DC converter is not galvanically isolated from output side.

An object of the present disclosure is to provide an improved electrical power supply system in terms of energy efficiency and safety, in particular with respect to the DC/DC converter. There is also a need for finding a solution for combining the improved vehicle electrical system with high power supply safety that fulfils the ASIL risk classification system. This object is at least partly achieved by the features of the independent claims.

According to a first aspect of the present disclosure, there is provided an electrical power supply system for an electric vehicle, the electrical system comprising: a first high-voltage battery having a plurality of series connected battery cells; a first inverter having an input operatively connected to the first high-voltage battery and an output configured to be connected to a first electric motor of the vehicle; a first multi-phase electrical transformer having a primary side and a secondary side, wherein the primary side is operatively connected to the output of the first inverter and configured to receive multi-phase high-voltage AC electrical power, and wherein the secondary side is configured to output multi-phase low-voltage AC electrical power; a first rectifier circuit operatively connected to the secondary side of the first multi-phase electrical transformer and configured to output low-voltage DC electrical power; and a first low-voltage battery having a plurality of series connected battery cells operatively connected to the first rectifier circuit for charging of the first low-voltage battery; wherein the first rectifier circuit and/or the first low-voltage battery are configured to supply low-voltage DC electrical power to at least a first electrical load of the vehicle.

By routing high-voltage AC electrical power from the inverter also to a multi-phase electrical transformer and rectifier, low-voltage DC can be supplied in a less costly manner, with less need for electronic components, and with high security isolation between high-voltage and low-voltage side. Step down of the voltages can easily be done by different winding ratio instead for the traditional DC/DC (by switching) which lead to losses. Furthermore, by using the existing inverter in a new manner the system can achieve a higher efficiency, lower cost and less complexities.

Further advantages are achieved by implementing one or several of the features of the dependent claims.

In some example embodiments, that may be combined with any one or more of the above-described embodiments, at least the first inverter, the first multi-phase electrical transformer and the first rectifier circuit are installed in a common housing to form a single unit. Increased integration of electrical components in a common housing or single unit generally results in a more compact design, more protection against external interference, simplified assembly in the vehicle, less cable harnesses, less weight, reduced voltage drops, and many other benefits.

In some example embodiments, that may be combined with any one or more of the above-described embodiments, at least the first high-voltage battery, the inverter, the first multi-phase electrical transformer and the first rectifier circuit are installed in a common housing to form a single battery pack. Increased integration of electrical components in a common housing or single unit generally results in a more compact design, more protection against external interference, simplified assembly in the vehicle, less cable harnesses, less weight, reduced voltage drops, and many other benefits.

In some example embodiments, that may be combined with any one or more of the above-described embodiments, at least the first high-voltage battery and the first low-voltage battery are installed in a common housing to form a single battery pack. Increased integration of electrical components in a common housing or single unit generally results in a more compact design, more protection against external interference, simplified assembly in the vehicle, less cable harnesses, less weight, reduced voltage drops, and many other benefits.

In some example embodiments, that may be combined with any one or more of the above-described embodiments, at least the first high-voltage battery, the first inverter, the first multi-phase electrical transformer, the first rectifier circuit and the first low-voltage battery are installed in a common housing to form a single battery pack. Increased integration of electrical components in a common housing or single unit generally results in a more compact design, more protection against external interference, simplified assembly in the vehicle, less cable harnesses, less weight, reduced voltage drops, and many other benefits.

In some example embodiments, that may be combined with any one or more of the above-described embodiments, the electric components of the single body or single battery pack that are operatively connected to a fluid cooling and/or fluid heating arrangement are operatively connected to the same cooling and/or fluid heating arrangement of the battery pack. Implementation of a compact and efficient cooling and/or heating circuit is simplified when the electrical components are located within a single battery pack.

In some example embodiments, that may be combined with any one or more of the above-described embodiments, at least the first high-voltage battery and the first low-voltage battery are controlled by the same electronic battery management system (BMS). Thereby, cost-savings can be obtained by avoiding having two separate battery management systems.

In some example embodiments, that may be combined with any one or more of the above-described embodiments, the single battery pack includes a first control unit that is configured to control operation of the first inverter and to operate the Battery Management System (BMS) of the high-voltage battery and of the low-voltage battery. Thereby, cost-savings can be obtained by avoiding having a separate controller for each system part.

In some example embodiments, that may be combined with any one or more of the above-described embodiments, the first electric transformer is a passive electric component. This is a cost-efficient solution.

In some example embodiments, that may be combined with any one or more of the above-described embodiments, the first electric transformer is variable transformer having a controllable transformer having a variable output voltage level. This may be desired for providing a more dynamic electrical output power from first electric transformer.

In some example embodiments, that may be combined with any one or more of the above-described embodiments, the first rectifier is a passive electric component. This is a cost-efficient solution.

In some example embodiments, that may be combined with any one or more of the above-described embodiments, the first transformer is a galvanically isolated transformer. This results in increased operating safety of the vehicle.

In some example embodiments, that may be combined with any one or more of the above-described embodiments, the electrical system further comprises an on-board charging inlet operably connected to a switch that is connected to the high-voltage (HV) DC line upstream of the first inverter and to the HV AC line downstream of the first inverter, wherein the switch is arranged to route HV DC electrical power received at the on-board charging inlet to the HV DC line upstream of the first inverter for charging of the HV battery, and wherein the switch is arranged to route HV AC electrical power received at the on-board charging inlet to the HV AC line downstream of the first inverter, wherein the first inverter is a bidirectional inverter that can act as a three-phase rectifier for charging the first HV battery. Thereby, a separate rectifier located in a dedicated on-board charger (OBD) can be eliminated.

In some example embodiments, that may be combined with any one or more of the above-described embodiments, the electrical system further comprises: a second multi-phase electrical transformer having a primary side and a secondary side, wherein the primary side is operatively connected to the output of the first inverter and configured to receive multi-phase high-voltage AC electrical power, and wherein the secondary side is configured to output multi-phase low-voltage AC electrical power; a second rectifier circuit operatively connected to the secondary side of the second multi-phase electrical transformer and configured to output low-voltage DC electrical power; and a second low-voltage battery having a plurality of series connected battery cells operatively connected to the second rectifier circuit for charging of the second low-voltage battery; wherein the second rectifier circuit and the second low-voltage battery are configured to supply low-voltage DC electrical power to at least one electrical load of the vehicle. This provides increased power supply reliability for fulfilling the redundancy requirements with respect to high safety and ASIL classification (Automotive Safety Integrity Level).

In some example embodiments, that may be combined with any one or more of the above-described embodiments, the electrical system further comprises: a second high-voltage battery having a plurality of series connected battery cells; a second inverter having an input operatively connected to the second high-voltage battery and an output configured to be connected to a second electric motor of the vehicle; a second multi-phase electrical transformer having a primary side and a secondary side, wherein the primary side is operatively connected to the output of the second inverter and configured to receive multi-phase high-voltage AC electrical power, and wherein the secondary side is configured to output multi-phase low-voltage AC electrical power; a second rectifier circuit operatively connected to the secondary side of the second multi-phase electrical transformer and configured to output low-voltage DC electrical power; and a second low-voltage battery having a plurality of series connected battery cells operatively connected to the second rectifier circuit for charging of the second low-voltage battery; wherein the second rectifier circuit and the second low-voltage battery are configured to supply low-voltage DC electrical power to at least a second electrical load of the vehicle. This provides further increased power supply reliability for fulfilling the redundancy requirements with respect to high safety and ASIL classification (Automotive Safety Integrity Level).

In some example embodiments, that may be combined with any one or more of the above-described embodiments, the battery cells of the first HV battery are different from the battery cells of the first LV battery, i.e. they are separate battery cells. This ensures high power supply reliability, redundancy and safety.

In some example embodiments, that may be combined with any one or more of the above-described embodiments, the battery cells of the first HV battery are different from the battery cells of the second LV battery, i.e. they are separate battery cells. This ensures high power supply reliability, redundancy and safety.

In some example embodiments, that may be combined with any one or more of the above-described embodiments, the battery cells of the first LV battery are different from the battery cells of the second LV battery, i.e. they are separate battery cells. This ensures high power supply reliability, redundancy and safety.

In some example embodiments, that may be combined with any one or more of the above-described embodiments, the battery cells of the first HV battery are different from the battery cells of the second HV battery, i.e. they are separate battery cells. This ensures high power supply reliability, redundancy and safety.

In some example embodiments, that may be combined with any one or more of the above-described embodiments, the battery chemistry of the high-voltage battery cells is different from the battery chemistry of the low-voltage battery cells. Thereby, each battery can be designed to better meet the requirements.

In some example embodiments, that may be combined with any one or more of the above-described embodiments, the single battery pack comprises a first high-voltage output terminal and a first DC low-voltage output terminal. This enables quick and simple assembly of the vehicle, and/or removal of the single battery pack for maintenance.

In some example embodiments, that may be combined with any one or more of the above-described embodiments, the single battery pack further comprises a second DC low-voltage output terminal that is galvanically isolated from the first DC low-voltage output terminal. This enables quick and simple assembly of the vehicle, and/or removal of the single battery pack for maintenance, while enabling increased low-voltage power supply redundancy.

In some example embodiments, that may be combined with any one or more of the above-described embodiments, the first high-voltage output terminal has at least three line contacts and is configured to supply multiphase high-voltage AC electrical power to a first high-voltage load.

In some example embodiments, that may be combined with any one or more of the above-described embodiments, the single battery pack further comprises a second high-voltage output terminal having at least three line contacts and being configured to supply multiphase high-voltage AC electrical power to a second high-voltage load. This enables quick and simple assembly of the vehicle, and/or removal of the single battery pack for maintenance, while enabling increased low-voltage power supply redundancy.

In some example embodiments, that may be combined with any one or more of the above-described embodiments, the first multi-phase electrical transformer is a core-type multi-phase electrical transformer, a shell-type multi-phase electrical transformer, or a toroidal multi-phase electrical transformer.

In some example embodiments, that may be combined with any one or more of the above-described embodiments, each phase of the multi-phase electrical transformer is associated with an individual magnetic core or individual limb of a magnetic core.

The disclosure also relates to a vehicle comprising the electrical system as described above, and additionally having a first electric high-voltage motor, and a first electrical low-voltage load of the vehicle, wherein the output of the first inverter is operatively connected to the first electric high-voltage motor of the vehicle, and wherein the first rectifier circuit and/or the first low-voltage battery are operatively connected to the first electrical low-voltage load of the vehicle.

According to a second aspect of the present disclosure, there is also provided a method for operating an electric vehicle. The method comprises: supplying high-voltage DC electrical power from a first high-voltage battery having a plurality of series connected battery cells to a first inverter; supplying high-voltage AC electrical power from the first inverter to an electric motor of the vehicle for driving the first electric motor; supplying high-voltage AC electrical power from the first inverter to a primary side of a first multi-phase electrical transformer; supplying low-voltage AC electrical power from a secondary side of the first multi-phase electrical transformer to a first rectifier circuit; supplying low-voltage DC electrical power from the rectifier circuit to a first low-voltage battery having a plurality of series connected battery cells for charging of the first low-voltage battery; supplying a low-voltage DC electrical power from the first rectifier circuit and/or the first low-voltage battery to at least a first electrical load of the vehicle.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The electrical power supply system and method according to the disclosure will be described in detail in the following, with reference to the attached drawings, in which
- Fig. 1: shows schematically a side-view of a battery electric vehicle having the electrical power supply system according to the disclosure,
- Fig. 2: shows a prior art solution of the electrical power supply system,
- Fig. 3: shows schematically a first example embodiment of the electrical power supply system according to the disclosure,
- Fig. 4: shows schematically a second example embodiment of the electrical power supply system according to the disclosure,
- Fig. 5: shows schematically a third example embodiment of the electrical power supply system according to the disclosure,
- Fig. 6: shows schematically a fourth example embodiment of the electrical power supply system according to the disclosure,
- Fig. 7A: shows schematically a fifth example embodiment of the electrical power supply system according to the disclosure,
- Fig. 7B: shows schematically a power transistor,
- Fig. 8: shows schematically a sixth example embodiment of the electrical power supply system according to the disclosure,
- Fig. 9: shows schematically a seventh example embodiment of the electrical power supply system according to the disclosure,
- Fig. 10: shows schematically a more detailed implementation of the electrical power supply system according to figure 6,
- Fig. 11: shows schematically a more detailed implementation of the electrical power supply system according to figure 8,
- Fig. 12: shows schematically a more detailed implementation of the electrical power supply system according to figure 9,
- Fig. 13-15: show various types of three-phase transformers,
- Fig. 16: shows schematically an example embodiments of a variable transformer, and
- Fig. 17: shows the main steps of the method according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

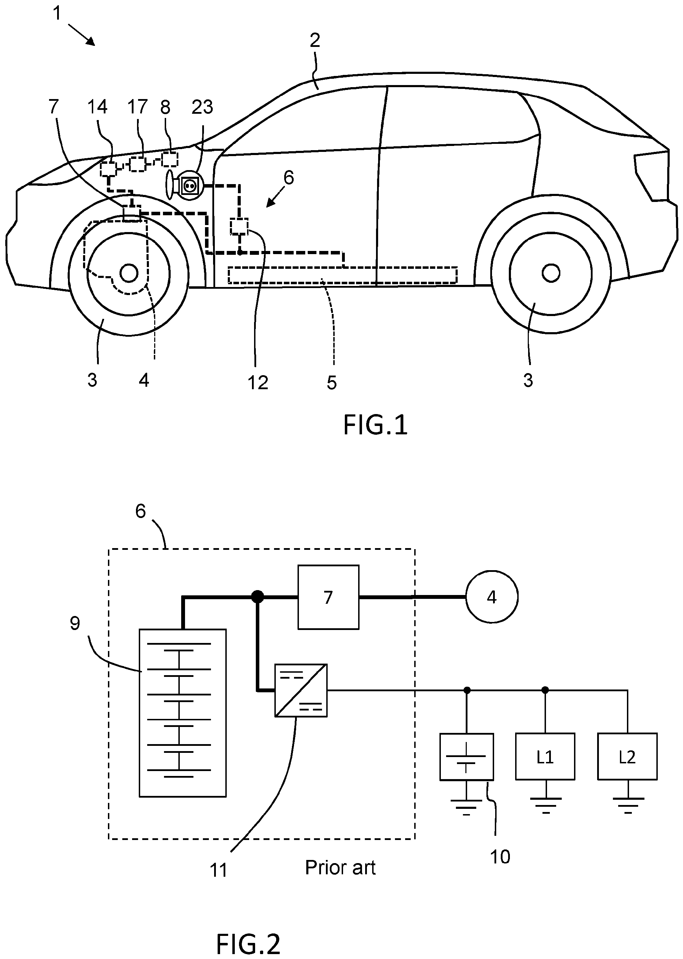

For the purpose of setting the electrical power supply system 6 according to the disclosure in a context, figure 1 schematically shows a side view of an example electrical vehicle 1, such as a car, having the electrical power supply system 6.

The vehicle 1 may have a vehicle body 2, front and rear wheels 3 and the on-board electrical power supply system 6, which includes a first high-voltage battery pack 5, a first inverter 7, a first electric AC motor 4 drivingly connected to one or more wheels 3, and a low-voltage battery 8.

In a conventional electrical power supply system, as schematically illustrated in figure 2, the electrical power supply system would typically include a high-voltage battery 9 connected to a low-voltage battery 10 via a non-isolated switched-mode DC/DC converter 11. The switched-mode DC/DC converter 11 would thus receive HV DC from the HV battery 9, convert the received HV DC to LV DC, and supply LV DC to the LV battery for charging thereof. The switched-mode DC/DC converter 11 would also function as a power supply for one or more LV loads L1, L2. A switched-mode DC/DC converter 10 typically includes an electronic switch, such as a MOSFET, IGBT, or BJT transistor, and can for example be implemented in form of buck or buck-boost topology. Such switched-mode DC/DC converters 11 result in energy losses during the conversion process that is transformed to heat. In addition, switched-mode DC/DC converter 11 are generally non-isolated, meaning that the input side of the DC/DC converter is not galvanically isolated from output side. The switched-mode DC/DC converter 11 may also generate problematic high-frequency noise, for example due to resonating inductance and stray capacitance, that may interfere with other parts of the electrical power supply system. Finally, switched-mode DC/DC converters 11 are costly due to the high-power power switches.

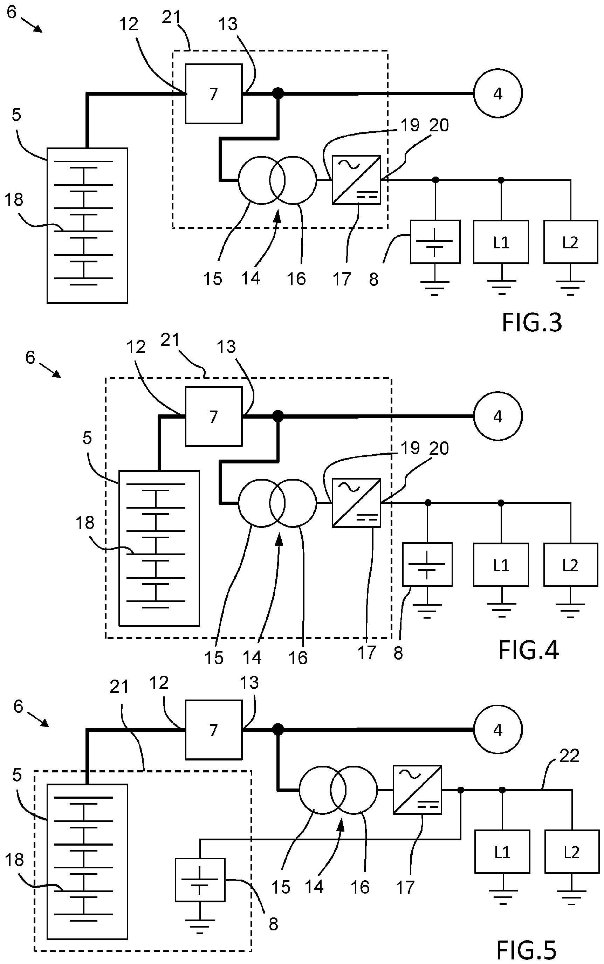

The present disclosure aim at providing a solution to these problems. Figure 3 shows a schematic view of an example embodiment of the electrical power supply system 6.

With reference to figure 1 and figure 3, the present disclosure relates to an electrical power supply system 6 for an electric vehicle 1.

The electrical system 6 comprises a first high-voltage 5 battery having a plurality of series connected battery cells, and a first inverter 7 having an input 12 operatively connected to the first high-voltage battery 5 and an output 13 configured to be connected to the first electric motor 4 of the vehicle.

The electrical power supply system 6 further comprises a first multi-phase electrical transformer 14 having a primary side 15 and a secondary side 16, wherein the primary side 15 of the first multi-phase electrical transformer 14 is operatively connected to the output 13 of the first inverter 7 and configured to receive multi-phase high-voltage AC electrical power from the inverter 7, and wherein the secondary side 16 of the first multi-phase electrical transformer 14 is configured to output multi-phase low-voltage AC electrical power, for example to the first low-voltage battery 8 and/or to one or more low-voltage loads L1, L2 of the electrical power supply system 6.

The electrical power supply system 6 further comprises a first rectifier circuit 17 operatively connected to the secondary side 16 of the first multi-phase electrical transformer 14 and configured to output low-voltage DC electrical power, and a first low-voltage battery 8 having a plurality of series connected battery cells operatively connected to the first rectifier circuit 17 for charging of the first low-voltage battery 8.

Moreover, the first rectifier circuit 17 and/or the first low-voltage battery 8 are configured to supply low-voltage DC electrical power to at least a first electrical low-voltage load L1, L2 of the vehicle.

Thereby, the technically complex and costly switched-mode DC/DC converter can be avoided and replaced by a more cost-efficient and reliable multi-phase electrical transformer combined with a rectifier circuit. Both the electrical transformer and the rectifier circuit can be designed as passive component, thus simplifying control and reducing complexity of the system. Moreover, the cost of an electrical transformer and a rectifier circuit is typically significantly lower than the cost of switched-mode high-power DC/DC converter. In addition, the electrical transformer ensure safe and reliable isolation between high-voltage side and low-voltage side of the electrical power supply system.

The ratio of step-down voltage between the primary and secondary side of multi-phase electrical transformer may easily be provided by selecting an appropriate winding ratio between the primary and secondary sides, instead of using the traditional switched-mode DC/DC that results energy losses.

In other words, the multi-phase electrical transformer connected to the output of the inverter combined with a rectifier circuit may be used for replacing the DC/DC converter located between high-voltage side and low-voltage side of the electrical power supply system. By using the existing first inverter as part of the new design, the electrical power supply system can provide higher efficiency, lower cost and reduced complexity, while largely maintained functionality.

The electric vehicle 1 may for example be a battery electric vehicle, a hybrid-electric vehicle, a fuel cell vehicle, or a road powered electric vehicle, or the like.

The plurality of series connected battery cells 18 of the first high-voltage 5 battery are configured for supplying high-voltage electrical power to a first high-voltage electrical load of the electrical system, such as for example the first electric motor 4, in particular a first electric propulsion motor 4 of the vehicle.

The first inverter 7 is configured to receive high-voltage DC electrical power from the first high-voltage battery 5 at the input 12, and configured to output multi-phase high-voltage AC electrical power at the output 13 for driving the first electric propulsion motor 4.

The first inverter is for example configured to output a three-phase alternating current (AC) and the first multi-phase electrical transformer is for example a three-phase electrical transformer. However, the first multi-phase electrical transformer 14 may alternatively be designed for handling more phases, such as a six-phase transformer or a nine-phase transformer. The same applies to the first inverter and the first electrical motor.

The first rectifier circuit has an input side 19 and an output side 20, wherein the input side is 19 operatively connected to the secondary side 16 of the first multi-phase electrical transformer 14 and wherein the output side 20 is configured to output low-voltage DC electrical power, in particular in the range of about 12-15 V.

The HV battery pack 5 comprises a plurality of electrochemical battery cells. For example, the HV battery may be a Lithium-Ion battery having a certain nominal voltage level, such as for example at least 48 Volt, specifically at least 200V. In some example embodiments, the nominal voltage level of the HV battery be in the range of 200 - 2000 V.

The plurality of series connected battery cells of the a first low-voltage battery 8 are for example operatively connected to the output side 20 of the first rectifier circuit 17 for charging of the first low-voltage battery 8.

In some operation situations, when the state of charge of the first low-voltage battery 8 is low, or simply when the first rectifier circuit 17 provides a high voltage level at the output side 20 of the rectifier circuit 17, the first rectifier circuit 17 may be configured to supply low-voltage DC electrical power to both the first low-voltage battery 8, for charging of the first low-voltage battery 8, and to the at least one first electrical low-voltage load L1, L2 of the vehicle.

In other operation situations, when the first rectifier circuit 17 supplies insufficient power, no power at all, or too low voltage level at the output side 20 of the rectifier circuit 17, the first low-voltage battery 8 steps in and supplies electrical power to the at least one first electrical low-voltage load L1, L2 of the vehicle.

Since the electrical power level at the output 13 of the first inverter varies over time in accordance with the requested power from the first electric motor 4, and since the first multi-phase electrical transformer 14 receives power from the output 13 of the first inverter 7, the electrical power level at the secondary side of the first multi-phase electrical transformer 14 will in some example embodiments vary over time, and this apples also to the electrical power level at the output side 20 of the first rectifier circuit 17. This applies in particular when the first multi-phase electrical transformer 14 and the first rectifier circuit 17 are passive, non-controllable, electrical components.

On the other hand, when the first multi-phase electrical transformer 14 is variable first multi-phase electrical transformer 14, and/or when the first rectifier circuit 17 is a provided with some type of active or passive voltage equalisation arrangement, such as a battery or capacitance arrangement, the electrical power level at the output side 20 of the first rectifier circuit 17 may be more stable and less dependent on the electrical output power level of the first inverter 7.

For example, an electronic control unit that controls the output voltage level of variable first multi-phase electrical transformer 14, and/or an output voltage level of an active voltage equalisation arrangement of the first rectifier circuit 17, may be provided, wherein the control strategy may be based on sensor input indicative of the voltage or electrical power level at the output 20 of the first rectifier circuit 17.

In the schematic illustration of the electrical power supply system 6 according to figure 3, at least the first inverter 7, the first multi-phase electrical transformer 14 and the first rectifier circuit 17 are installed in a common housing or casing 21 to form a single unit. The common housing would then have a HV DC input connector for receiving HV DC from the first HV battery 5, a HV AC output connector for supplying HV AC electrical power to the first electrical motor 4, and a LV DC output connector for supplying LV DC electrical power to vehicle low voltage loads L1, L2, and for charging the first LV battery 8.

Be installing several different electrical system parts in a common housing, there will be less cable harnesses, reduced voltage drop in the cable harness, a more compact design, reduced weight, and reduced risk for malfunction caused by damaging interference from for example animals, such as rodents, moisture, dirt, vibrations, etc. Furthermore, a common housing generally enables a more cost-efficient assembly of the vehicle. In addition, design, implementation and operation of a cooling and/or heating arrangement for the electrical parts of the common housing is simplified and more efficient.

The common housing 21 may for example be made of metal, such as aluminium, or a polymeric material. In addition, the common housing may after complemented assembly be closed and sealed for preventing water from entering the common housing.

In the schematic illustration of the electrical power supply system 6 according to figure 4, at least the first high-voltage battery 5, the inverter 7, the first multi-phase electrical transformer 14 and the first rectifier circuit 17 are installed in a common housing to form a single battery pack.

The common housing 21 would then have a HV AC output connector for supplying HV AC electrical power to the first electrical motor 4, and a LV DC output connector for supplying LV DC electrical power to vehicle low voltage loads L1, L2, and for charging the first LV battery 8.

The common housing 21 according to figure 4 provides still less cable harnesses, more compact design, reduced weight, and reduced risk for malfunction caused by damaging interference from for example animals, such as rodents, moisture, dirt, vibrations, etc. Furthermore, a common housing 21 generally enables a more cost-efficient assembly of the vehicle. In addition, design, implementation and operation of a cooling and/or heating arrangement for the electrical parts of the common housing 21 is simplified and more efficient.

In the schematic illustration of the electrical power supply system 6 according to figure 5, at least the first high-voltage battery and the first low-voltage battery are installed in a common housing 21 to form a single battery pack.

This provides less cable harnesses, more compact design, reduced weight, and reduced risk for malfunction caused by damaging interference from for example animals, such as rodents, moisture, dirt, vibrations, etc. Furthermore, a common housing 21 generally enables a more cost-efficient assembly of the vehicle. In addition, design, implementation and operation of a cooling and/or heating arrangement for the electrical parts of the common housing 21 is simplified and more efficient.

Furthermore, since the battery cells of the HV and LV battery generally are sensitive to low and high temperatures, a common housing 21 enables significant improvements and cost-reduction in terms of providing an efficient temperature control of the battery cells, including aspects such as heat insulation, heating arrangements, and cooling arrangements.

In addition, the integration of the LV battery 8 in a common housing 21 together with the HV battery 5 may eliminate the need for a separate LV battery operatively connected to the LV DC bus 22 of the electrical power supply system 6.

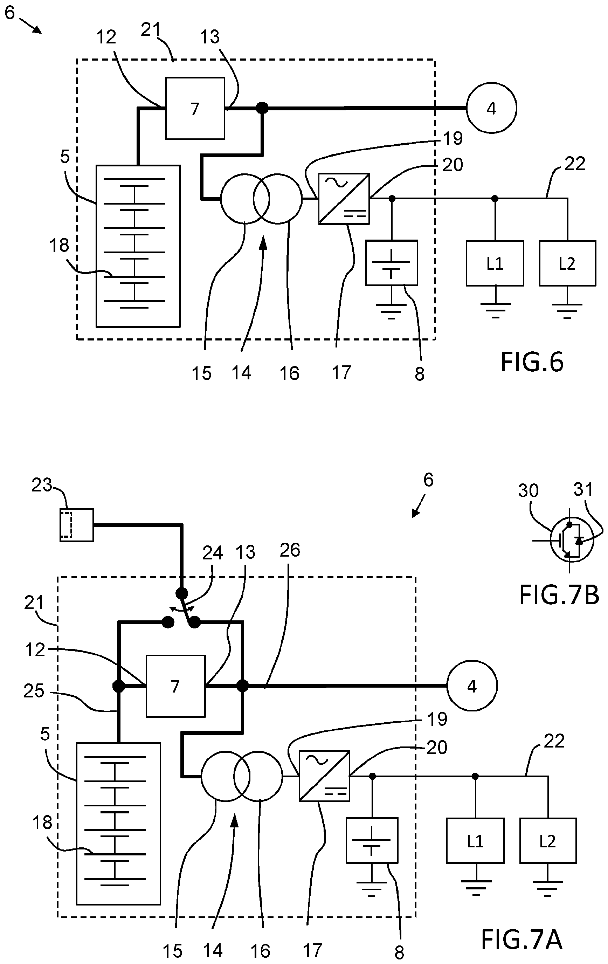

In the schematic illustration of the electrical power supply system 6 according to figure 6, at least the first high-voltage battery 5, the first inverter 7, the first multi-phase electrical transformer 14, the first rectifier circuit 17 and the first low-voltage battery 8 are installed in a common housing to form a single battery pack.

The integration or even more electrical components into a single common housing or casing 21 provides further improvement in terms of less cable harnesses, more compact design, reduced weight, and reduced risk for malfunction caused by damaging interference from for example animals, such as rodents, moisture, dirt, vibrations, etc. Furthermore, a common housing or casing 21 generally enables a more cost-efficient assembly of the vehicle, as well as simplified and more efficient design, implementation and operation of a cooling and/or heating arrangement for the electrical parts of the common housing 21.

In the schematic illustration of the electrical power supply system 6 according to figure 7A, the electrical system further comprises an on-board charging inlet 11 operably connected to a switch 24 that is connected to the HV DC line 25 upstream of the first inverter 7 and to the HV AC line 26 downstream of the first inverter 7, wherein the switch 24 is arranged to route HV DC electrical power received at the on-board charging inlet 23 to the HV DC line 25 upstream of the first inverter 7 for charging of the HV battery, and wherein the switch 24 is arranged to route HV AC electrical power received at the on-board charging inlet 23 to the HV AC line 26 downstream of the first inverter 7, wherein the first inverter 7 is a bidirectional inverter that can act as a three-phase rectifier for charging the first HV battery 5 by means of the HV AC electrical power received at the on-board charging inlet 23.

By using the power transistor of the inverter for rectifying the HV AC electrical power received at the on-board charging inlet 23, before supplying to the first HV battery 5, means that that no separate On-Board charger with a rectifier is required. In other words, the first inverter 7 would have dual functionality.

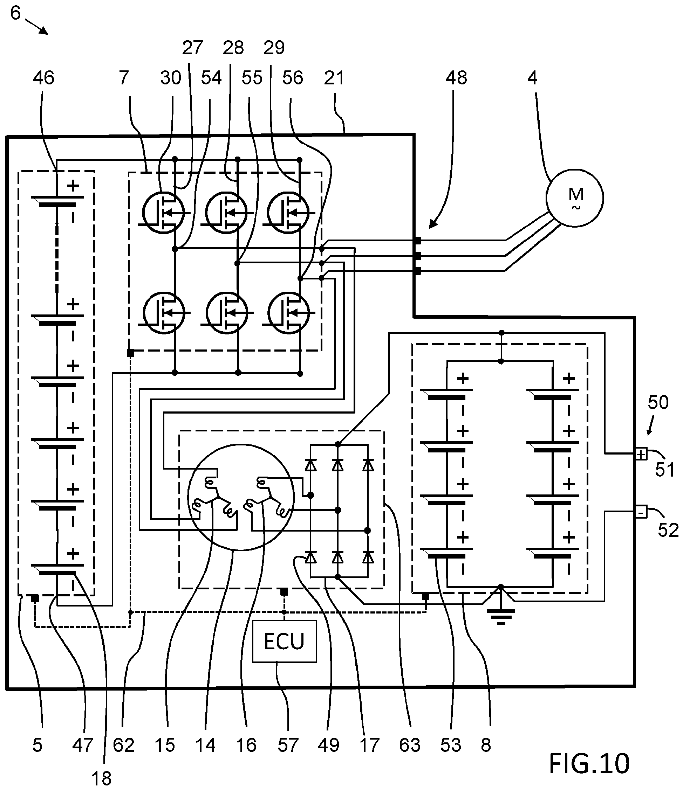

As schematically illustrated in figure 10, the first inverter 7 could be provided with three switch legs, i.e. a first switch leg 27, a second switch leg 28 and a third switch leg 29, all connected in parallel and also in parallel with the positive and negative pole of the first HV battery 5.

Each switch leg 27-29 may have two switches 30 connected in series, and a first stator winding of the first electrical machine 4 may be connected between the switches of the first switch leg 27, a second stator winding of the first electrical machine 4 may be connected between the switches of the second switch leg 28, and a third stator winding of the first electrical machine 4 may be connected between the switches of the third switch leg 29.

For powering the first electrical motor 4, each switch leg 27-29 of the first inverter 7 supplied with HV DC from the HV battery 5, and an inverter electronic controller may control the switches 30 to execute appropriate switching operation for generating a phase-shifted output voltage to the stator windings of the first electrical motor 4.

The switches 30 may for example be power transistors for controlling torque and/or speed of the first multiphase electrical machine 4. For example, the switches may be Insulated Gate Bipolar Transistor (IGBTs) or MOSFETs.

As schematically illustrated in figure 7B, each of the switches 30 of the first inverter 7 is provided with a parallel-connected reverse diode 31, also known as freewheeling diode, body diode or snubber diode. The reverse diode may for example be an intrinsic diode, i.e. a reverse diode functionality. For example, MOSTFET types transistors typically include intrinsic reverse diode functionality due to their design and structure. However, some IGBTs generally do not have such intrinsic reverse diodes and may then instead be provided with an extrinsic reverse diode, i.e. physically individual diode separate from the transistor, connected in parallel with the transistor. Moreover, also MOSFET transistors may be provided with an extrinsic reverse diode. Reverse diodes are needed for avoiding that large negative voltage may build up over the transistor when switching an inductive load, because an inductive load typically generate a large negative voltage during negative current changes, thereby potentially destroying the transistor.

Rectifying the HVAC electrical power received at the on-board charging inlet 23 using the power transistor of the first inverter 7 is possible by connecting each of the three phases of the HV AC electrical power between the series connected switches 30 of an individual switch leg of the first inverter 7. For charging of the first HV battery using electrical energy supplied via the on-board charging inlet 23, the inverter controller is configured to keep all switches 30 of the first inverter 7 in an open state, i.e. nonconductive state. As a result, the intrinsic or extrinsic reverse diode associated with the switches of the first inverter functions as a full-bridge rectifier for rectifying the three-phase charging current before supplying to the HV battery 5.

The on-board charging inlet 23 is for example an electric socket easily accessibly on the outside of the vehicle 1 and configured to receive an electric charging plug or charging connector of a stationary external charging unit. Such stationary charging units are for example available at public charging stations or at the home, and they are connected to the electric power grid. Alternatively, the on-board charging inlet 23 may be part of a wire-less charging pad arrangement configured for receiving electric power from the electric grid wirelessly, e.g. by inductive/capacitive power transfer from a stationary ground pad to vehicle mounted receiving pad.

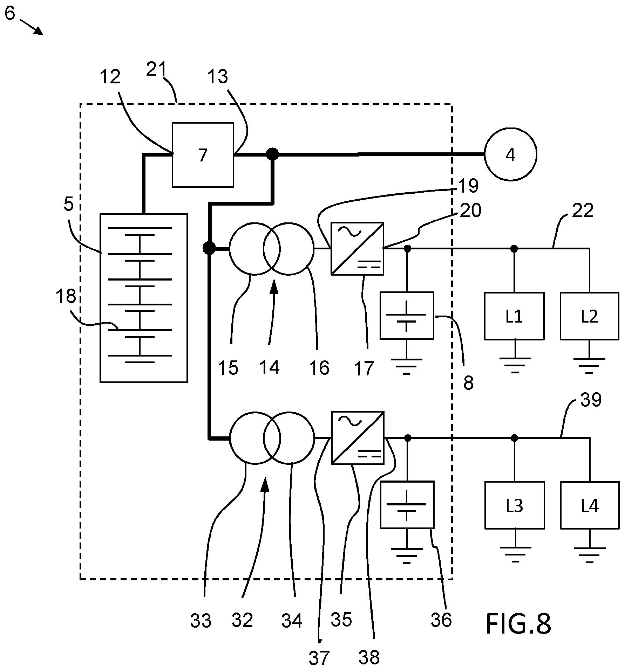

In the schematic illustration of the electrical power supply system 6 according to figure 8, the electrical system further comprises: a second multi-phase electrical transformer 32 having a primary side 33 and a secondary side 34, wherein the primary side 33 is operatively connected to the output 13 of the first inverter 7 and configured to receive multi-phase high-voltage AC electrical power, and wherein the secondary side 34 is configured to output multi-phase low-voltage AC electrical power; a second rectifier circuit 35 operatively connected to the secondary side 34 of the second multi-phase electrical transformer 32 and configured to output low-voltage DC electrical power; and a second low-voltage battery 36 having a plurality of series connected battery cells operatively connected to the second rectifier circuit 35 for charging of the second low-voltage battery 36; wherein the second rectifier circuit 35 and the second low-voltage battery 36 are configured to supply low-voltage DC electrical power to at least one electrical load L3, L4 of the vehicle 1.

The second multi-phase electrical transformer 32 is for example a three-phase electrical transformer, wherein the secondary side of the second multi-phase electrical transformer 32 is configured to output three-phase low-voltage AC electrical power.

The second rectifier circuit 35 has an input side 37 and an output side 38, wherein the input side 37 is operatively connected to the secondary side 34 of the second multi-phase electrical transformer 32 and wherein the output side 38 is configured to output low-voltage DC electrical power to the second low-voltage battery 36 and/or the at least one electrical load L3, L4.

The plurality of series connected battery cells of the second low-voltage are operatively connected to the output side 38 of the second rectifier circuit 35.

The provision of parallel connected redundant first and second low-voltage batteries 8, 36 provides redundant low-voltage power supply and improved fault tolerance against various power supply failure scenarios, thereby enabling increased operational safety to various safety critical low-voltage loads that are connected to said first and second low-voltage batteries 8, 36.

This may be required in drive-by-wire systems. Furthermore, level 3 - 5 of autonomous vehicles (AVs) must generally be designed to have appropriate levels of fault tolerance in hardware, and this is accomplished by redundant low-voltage power supply to certain safety critical electrical loads, such as for example electric steering system, electric braking system, obstacle detection system, navigation system, electronic controllers, the like.

For example, a redundant vehicle braking system may include first and second electrical braking modules L1, L3 each powered by an individual low-voltage battery 8, 36, such that failure of one of the low-voltage batteries 8, 36, or one of the braking modules L1, L3, will not prevent the vehicle from having operational braking capacity, namely by means of the other, fault-free, low-voltage battery 8, 36 or braking module L1, L3. The same type of redundant may be required for an electrical vehicle steering
The first and second low-voltage DC buses 22, 39 are galvanically isolated from each other by means of the first and second multi-phase electrical transformers 14, 32. Thereby, a single fault, such as a short-circuit or the like, in one of the low-voltage DC buses 22, 39 will not harm of the correct operation or functioning of the other of the low-voltage DC buses 22, 39.

In some example embodiments, the first high-voltage battery 5, the first inverter 7, the first multi-phase electrical transformer 14, the first rectifier circuit 17, the first low-voltage battery 8, the second multi-phase electrical transformer 32, the second rectifier circuit 35 and the second low-voltage battery 36, are all installed in a common housing to form a single battery pack.

The integration of even more electrical components into a single common housing or casing 21 provides improvement in terms of less cable harnesses, more compact design, reduced weight, and reduced risk for malfunction. Furthermore, a common housing or casing 21 generally enables a more cost-efficient assembly of the vehicle, as well as simplified and more efficient design, implementation and operation of a cooling and/or heating arrangement for the electrical parts of the common housing 21.

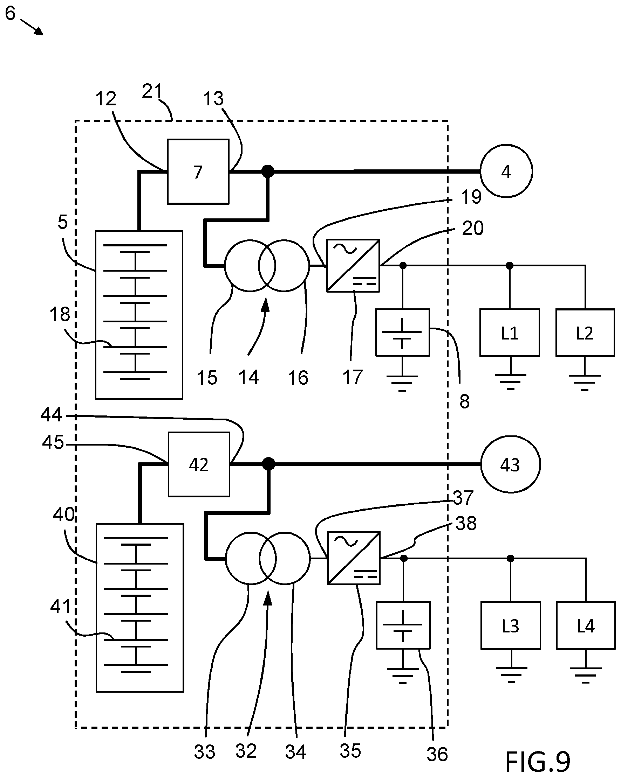

In the schematic illustration of the electrical power supply system 6 according to figure 9, the driving redundancy and single fault safety is even further increased by providing the electrical system 6 with a second high-voltage battery 40 having a plurality of series connected battery cells 41, and a second inverter 42 having an input 45 operatively connected to the second high-voltage battery 40 and an output 44 configured to be connected to a second electric motor 43, in particular a second electric propulsion motor, of the vehicle 1. Furthermore, the primary side 33 of the second multi-phase electrical transformer 32 is operatively connected to the output 44 of the second inverter 42 and configured to receive multi-phase high-voltage AC electrical power, and wherein the secondary side 34 of the second multi-phase electrical transformer 32 is configured to output multi-phase low-voltage AC electrical power. Moreover, the second rectifier circuit 35 is operatively connected to the secondary side 34 of the second multi-phase electrical transformer 32 and configured to output low-voltage DC electrical power, and the second low-voltage battery 36 is operatively connected to the output 38 of the second rectifier circuit 35 for charging of the second low-voltage battery 36, wherein the second rectifier circuit 35 and the second low-voltage battery 36 are configured to supply low-voltage DC electrical power to at least a second electrical load L3, L4 of the vehicle.

The second inverter 42 configured to receive high-voltage DC electrical power from the second high-voltage battery 40 at the input 45, and configured to output multi-phase high-voltage AC electrical power at the output 44 for driving the second electric propulsion motor.

In some example embodiments, the first high-voltage battery 5, the first inverter 7, the first multi-phase electrical transformer 14, the first rectifier circuit 17, the first low-voltage battery 8, the second high-voltage battery 40, the second inverter 42, the second multi-phase electrical transformer 32, the second rectifier circuit 35 and the second low-voltage battery 36, are all installed in a common housing to form a single battery pack.

The integration of even more electrical components into a single common housing or casing 21 provides improvement in terms of less cable harnesses, more compact design, reduced weight, and reduced risk for malfunction. Furthermore, a common housing or casing 21 generally enables a more cost-efficient assembly of the vehicle, as well as simplified and more efficient design, implementation and operation of a cooling and/or heating arrangement for the electrical parts of the common housing 21.

With respect to the electrical power supply system 6 of figures 3 to 9, the electric components of the single housing or single battery housing may according to some example embodiments be operatively connected to the same cooling and/or fluid heating arrangement. This means further increased integration of parts and functionality in a single housing, and less separate parts and less external cooling fluid pipes, thereby enabling a more compact and light weight design having simplified mounting.

The schematic illustration of the electrical power supply system 6 according to figure 10 represents one example embodiment of a more detailed implementation of the electrical power supply system 6 of figure 6, but without the low-voltage loads L1, L2 showed in figure 6.

Figure 10 shows an electrical power supply system 6 comprising the first high-voltage battery 5 with its series connected battery cells 18, the first inverter 7, the first multi-phase electrical transformer 14, the first rectifier circuit 17 and the first low-voltage battery 8, all installed in a common housing 21 to form a single battery pack.

In this example embodiment, the first inverter 7 is a three-phase inverter having three parallel connected switch legs 27-30, each including two series connected switches 30 and being connected to the positive and negative pole 46, 47 of the HV battery 5. The common housing 21 includes a first high-voltage output terminal 48, which includes a first phase connected to a centre point 54 of the first switch leg 27, i.e. between the switches 30 of the first switch leg 27, a second phase connected to a centre point 55 of the second switch leg 28, and a third phase connected to a centre point 56 of the third switch leg 29.

In other words, the first high-voltage output terminal 48 has at least three line contacts and is configured to supply multiphase high-voltage AC electrical power to a first high-voltage load 4, e.g. the first electrical motor 4.

The first electrical motor 4, which may be a three-phase AC motor, may be connected to the first high-voltage output terminal 48.

In this example embodiment, the first multi-phase electrical transformer is a three-phase transformer having a primary side 15 with three windings and a secondary side 16 with three windings. The three windings of the primary side 15 are connected to a centre point of the first, second and third switch legs 27-29, respectively.

In this example embodiment, the first rectifier is a three-phase full-bridge rectifier having three parallel connected rectifier legs, each including two series connected diodes 49, wherein a first winding of the secondary side 46 is connected to a centre point of a first rectifier leg, i.e. between the two diodes 49 of the first rectifier leg, a second winding of the secondary side 46 is connected to a centre point of a second rectifier leg, and a third winding of the secondary side 46 is connected to a centre point of a third rectifier leg of the first rectifier 17.

The three parallel connected rectifier legs of the first rectifier 17 are also parallel connected with the first low-voltage battery 8 and a first low-voltage output terminal 50 having a positive pole 51 and a negative pole 52.

Various low-voltage loads L1, L2 may be connected to the first low-voltage output terminal 50 of the electrical power supply system 6.

In this example embodiment, the first low-voltage battery 8 is illustrated as having two parallel connected strings of series connected battery cells, but the number is strings can be varied depending on the required low-voltage capacity.

Similarly, in the illustrated example embodiment of figure 10, the first high-voltage battery 5 is illustrated as having merely one string of series connected battery cells, but the number is parallel connected strings can be varied depending on the required high-voltage capacity. Normally, the first high-voltage battery 5 includes many parallel connected strings of series connected battery cells, such as for example 5 - 200 strings, depending on the capacity of each individual cell, etc.

Consequently, in some example embodiments, the plurality of series connected battery cells of the high-voltage battery form a first string of batteries, wherein the high-voltage battery includes a plurality of such strings of series connected battery cells.

Moreover, in some example embodiments, the plurality of strings of series connected battery cells of the high-voltage battery are installed in a plurality of individual high-voltage battery modules, wherein the plurality of series connected battery cells of the low-voltage battery are installed in a separate low-voltage battery module. These modules are subsequently installed in a single housing or in a single battery pack
The battery cells 18 of the first HV battery 5 are different from the battery cells 53 of the first LV battery 8, i.e. they are separate battery cells.

Moreover, the battery chemistry of the first high-voltage battery cells 18 may be different, or the same, as the battery chemistry of the first low-voltage battery cells 53. A battery cell is a electrochemical unit, and the battery chemistry of a cell is determined by the material selected for anode, cathode and electrolyte of said cell.

The first DC low-voltage output terminal 50 is galvanically isolated from the first high-voltage output terminal, from the first inverter 7 and from the high-voltage battery 5, due the inherent properties of the first electrical transformer 14. This increases safety of the electrical power supply system 6.

At least some of the electrical parts of the electrical power supply system 6 of figure 10 are configured to be controlled by an electronic control system. Each of the first high-voltage battery and first low-voltage battery typically requires monitoring of battery and/or cell temperature, battery cell charge balancing, control of for example battery disconnect breaker for being able to disconnect the battery from the electric circuit, for example in case of emergency, charge drain, overheating, etc. This is typically performed by a battery management system (BMS).

In some example embodiments, at least the first high-voltage battery and the first low-voltage battery may be controlled by the same electronic battery management system (BMS). This enables a more a cost-efficient design of the electrical power supply system 6.

Operation of the switches of the first inverter 7 requires an electronic inverter control unit. Furthermore, in some example embodiments, when the first electric transformer is variable transformer having a controllable transformer having a variable output voltage level, a transformer controller may be required for controlling the output voltage level.

In some example embodiments, the various electrical components of the electrical power supply system 6 may be controlled by a single control unit 57 integrated in the common housing 21. In other words, the single battery pack of figure 10 may include a first control unit 57 that is configured to at least control operation of the first inverter 7 and to operate the Battery Management System (BMS) of the high-voltage battery 5 and of the low-voltage battery 8. The first control unit 57 may also be configured to control a variable transformer 14.

The first control unit 57 may be connected to the various electrical components of the parts integrated in the common housing 21 via control lines and/or data communication lines 62.

In some example embodiments, the first multi-phase electrical transformer may be integrated with the first rectifier 17 to a single unit 63.

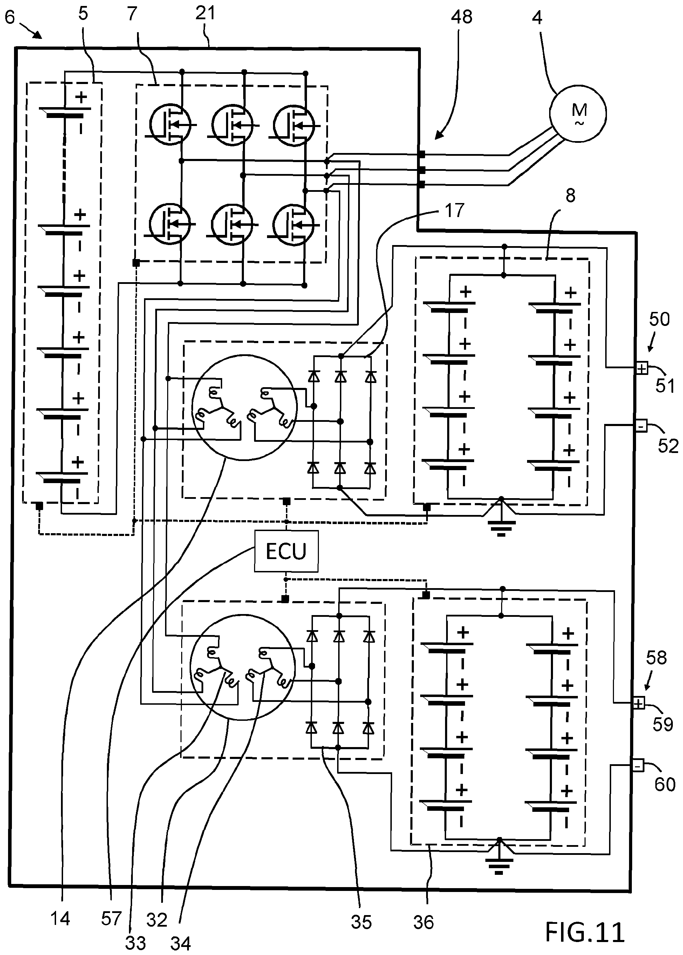

The schematic illustration of the electrical power supply system 6 according to figure 11 represents one example embodiment of a more detailed implementation of the electrical power supply system 6 of figure 8, but without the low-voltage loads L1, L2, L3, L4 showed in figure 8.

Many details of the electrical power supply system 6 of figure 11 are the same as those described with reference to figure 10, and will not be repeated.

The embodiment of figure 11 differs from the embodiment of figure 10 in that the electrical system 6 further comprises a second three-phase electrical transformer 32 having a primary side 33 and a secondary side 34, wherein the primary side 33 is operatively connected to the output of the first inverter 7, i.e. in parallel with first three-phase electrical transformer 14, and configured to receive three-phase high-voltage AC electrical power from the first rectifier 7. The secondary side 34 of the second three-phase electrical transformer 32 is configured to output three-phase low-voltage AC electrical power. A second rectifier circuit 35 having the same design as the first rectifier circuit 17 is operatively connected to the secondary side 34 of the second three-phase electrical transformer 32 and configured to output low-voltage DC electrical power. A second low-voltage battery 36 having a plurality of series connected battery cells is operatively connected to the output of the second rectifier circuit 35 for charging of the second low-voltage battery 36. The second rectifier circuit 35 and the second low-voltage battery 36 are configured to supply low-voltage DC electrical power to a second low-voltage output terminal 58 via a positive pole 59 and a negative pole 60 of the second low-voltage output terminal 58.

Consequently, the electrical power supply system 6 of figure 11 comprises the first high-voltage battery 5 with its series connected battery cells 18, the first inverter 7, the first multi-phase electrical transformer 14, the first rectifier circuit 17, the first low-voltage battery 8, the second multi-phase electrical transformer 32, the second rectifier circuit 35, the second low-voltage battery 36, all installed in a common housing 21 to form a single battery pack.

In some example embodiments, the various electrical components of the electrical power supply system 6 may be controlled by a single control unit 57 integrated in the common housing 21.

Both the first and second DC low-voltage output terminals 50, 58 are galvanically isolated from the first high-voltage output terminal 48, from the first inverter 7 and from the high-voltage battery 5, due the inherent properties of the first and second electrical transformers 14, 32. This increases safety of the electrical power supply system 6. Moreover, the first DC low-voltage output terminal 50 is are galvanically isolated from the second DC low-voltage output terminal 58 due the inherent properties of the first and second electrical transformers 14, 32, such that a single-fault in one of the two low-voltage systems cannot propagate also to the other of the two low-voltage systems.

The battery cells of the first LV battery 8 are different from the battery cells of the second LV battery 36, i.e. they are separate battery cells.

Moreover, the battery cells 18 of the first HV battery 5 are different from the battery cells of the second LV battery 36, i.e. they are separate battery cells.

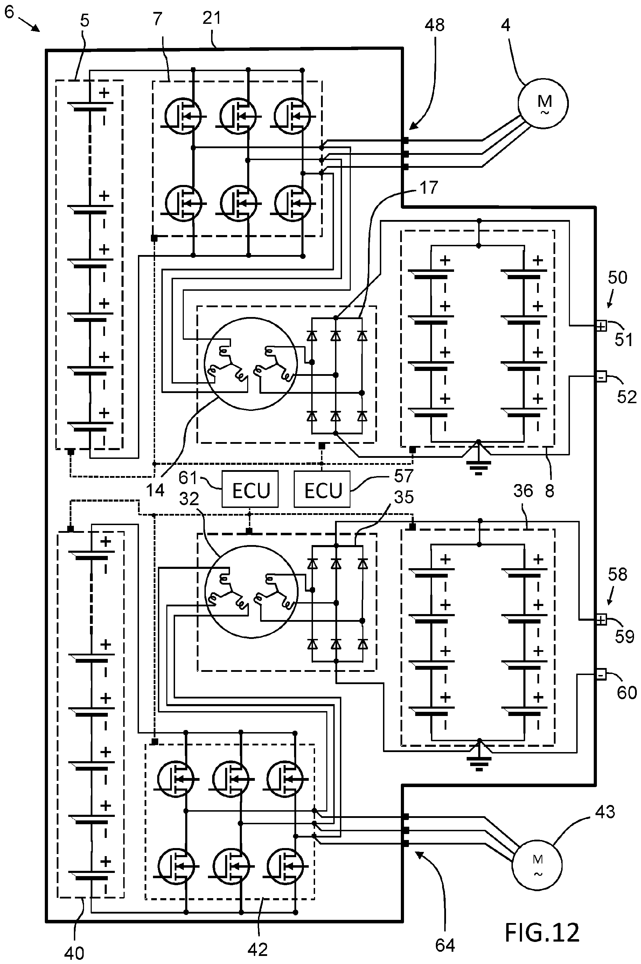

The schematic illustration of the electrical power supply system 6 according to figure 12 represents one example embodiment of a more detailed implementation of the electrical power supply system 6 of figure 9, but without the low-voltage loads L1, L2, L3, L4 showed in figure 9.

Many details of the electrical power supply system 6 of figure 12 are the same as those described with reference to figure 10 and 11, and will not be repeated.

The embodiment of figure 12 differs from the embodiment of figure 11 in that the electrical system 6 further comprises a second high-voltage battery 40 and a second three-phase inverter 42, wherein the primary side 33 of the second three-phase electrical transformer 32 is operatively connected to the output of the second inverter 32.

Consequently, the electrical power supply system 6 of figure 12 comprises a first part including the first high-voltage battery 5 with its series connected battery cells 18, the first inverter 7, the first multi-phase electrical transformer 14, the first rectifier circuit 17, the first low-voltage battery 8. Furthermore, the electrical power supply system 6 of figure 12 additionally comprises a second part including the second high-voltage battery 40 with its series connected battery cells 41, the second inverter 42, the second multi-phase electrical transformer 32, the second rectifier circuit 35, the second low-voltage battery 36.

Said first and second parts of the electrical power supply system 6 are completely separated from each, while still be all installed in a common housing 21 to form a single battery pack.

In some example embodiments, the various electrical components of the first part of the electrical power supply system 6 may be controlled by a first control unit 57 integrated in the common housing 21, and the various electrical components of the second part of the electrical power supply system 6 may be controlled by a second control unit 61, wherein both the first and second control units 57, 61 are integrated in the common housing 21. Alternatively, the various electrical components of the electrical power supply system 6 of figure 12 may be controlled by a single control unit 57 integrated in the common housing 21.

In this example embodiment, the second inverter 42 is a three-phase inverter having three parallel connected switch legs, each including two series connected switches and being connected to the positive and negative pole of the second HV battery 40.

The common housing 21 additionally includes a second high-voltage output terminal 58, which includes a first phase connected to a centre point of the first switch leg of the second inverter 42, i.e. between the switches of the first switch leg, a second phase connected to a centre point of the second switch leg 28, and a third phase connected to a centre point of the third switch leg.

In other words, the second high-voltage output terminal 64 has at least three line contacts and is configured to supply multiphase high-voltage AC electrical power to a second high-voltage load 43, e.g. the second electrical motor 43.

The second electrical motor 43, which may be a three-phase AC motor, may be connected to the second high-voltage output terminal 64.

Each of the first and second DC low-voltage output terminals 50, 58 and first and second high-voltage output terminals 48, 64 are galvanically isolated from each other, due the inherent properties of the first and second electrical transformers 14, 32. This increases safety of the electrical power supply system 6.

The battery cells of the first HV battery 5 are different from the battery cells of the second HV battery 40, i.e. they are separate battery cells. In other words, the battery cells of each HV battery in the electrical power supply system are separate and individual.

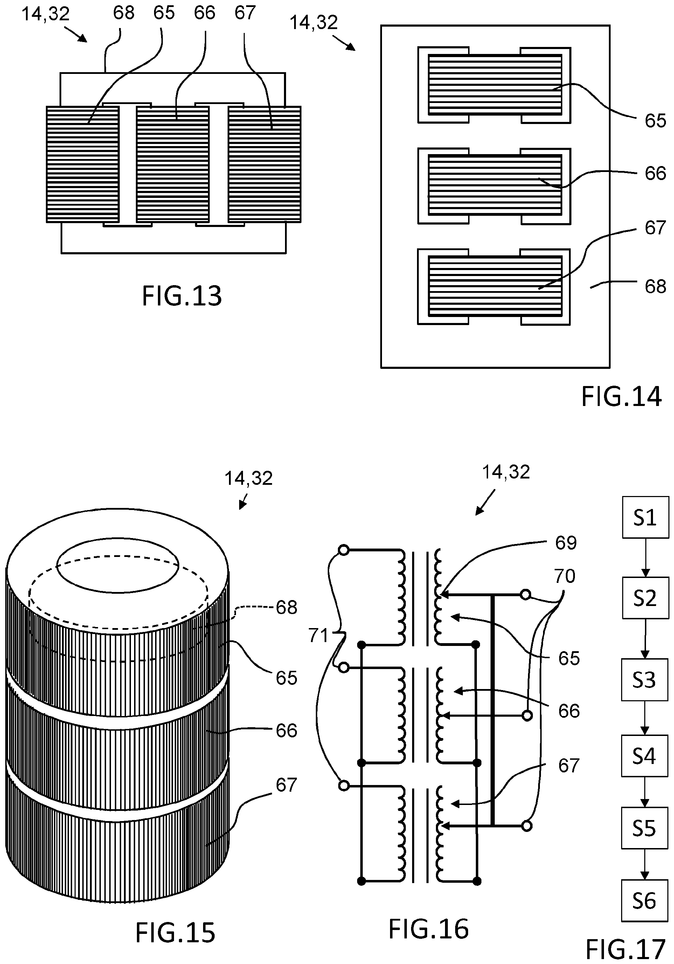

Figures 13-15 shows some examples of different types of three-phase electrical transformers that can be used for the first and second multi-phase electrical transformer 14, 32, each having a first phase winding arrangement 65, a second phase winding arrangement 66, and a third phase winding arrangement 67.

Figure 13 shows a core-type three-phase electrical transformer. In a three-phase core-type transformer, the core 68 consists of three limbs, wherein each of these limbs contains both the primary and secondary windings of each phase. The primary and secondary windings may be better referred to as the high voltage and low voltage windings. The low voltage windings are often wound closest to the core 68, and the high voltage coil is then wound around the low voltage winding, while ensuring proper insulation between the low and high-voltage windings. Thereby, the primary and secondary windings of each phase are magnetically coupled with each other.

Figure 14 shows a shell-type three-phase electrical transformer. In a shell-type three-phase transformer having a core 68 with five limbs, wherein the high voltage and low voltage windings of each phase are wrapped around the three main limbs, respectively. The low voltage may be located closest to the core 68 , and the high voltage coil is then wound around the low voltage winding , while ensuring proper insulation between the low and high-voltage windings. A shell-type three-phase transformer further has two outer limbs, such that the magnetic flux has additional return paths.

Figure 15 shows a toroidal three-phase electrical transformer having three donut-shaped individual cores 68, one for each phase, wherein each core 68 has a primary winding and a secondary winding separated by insulation. Toroidal three-phase electrical transformers are characterised by their compact size, high efficiency, lightweight and low EMI, thereby rendering this type of transformer particularly suitable for a vehicle application.

According to some example embodiment, each of the first and second electric transformers is a passive electric component, i.e. a non-controllable electric component having fixed and non-variable windings.

However, as schematically illustrated in figure 16, one or both of the first and second electric transformer 14, 32 may be a variable electric transformer, i.e. a controllable transformer having a variable output voltage level, also referred to as a three-phase variac. A variable electric transformer typically has a control mechanism enabling adjustment of the ratio of voltage transformation, such as for example the winding ratio between the primary and secondary winding.

The control mechanism for enabling adjustment of a transformer turns ratio may for example be implemented based on a variable tapping point 69, wherein the tapping point 69 for each phase 65-67 is adjusted simultaneously and with the same level. A three-phase variable electric transformer 14, 32 typically includes three input connectors 70, one for each phase, and three output connectors 71, one for each phase.

Alternatively, the first and/or second multi-phase electrical transformer may be a passive electric component, i.e. a transformer having constant winding ratio.

Also the first rectifier may be a passive electric component, i.e. a non-controllable rectifier, such as a three phase bridge rectifier.

Each phase of the three-phase electrical transformer may be associated with an individual magnetic core, such as a ferrite core.

With reference to figure 1, the present disclosure also concerns a vehicle comprising the electrical power supply system as described above, wherein the electrical power supply system comprises a first electric high-voltage motor 4, and a first electrical low-voltage load L1-L2 of the vehicle, wherein the output of the first inverter 7 is operatively connected to the first electric high-voltage motor 4 of the vehicle, and wherein the first rectifier circuit 17 and/or the first low-voltage battery 8 are operatively connected to the first electrical low-voltage load L1, L2 of the vehicle 1.

A method for operating an electric vehicle will herein be described with reference to figure 17. Figure 17 shows a flow-chart having six main steps S1-S6 of the invention. The first step S1 of the method comprises supplying high-voltage DC electrical power from a first high-voltage battery 5 having a plurality of series connected battery cells to a first inverter 7.

The second step S2 of the method comprises supplying high-voltage AC electrical power from the first inverter 7 to an electric motor 4 of the vehicle for driving the first electric motor 4.

The third step S3 of the method comprises supplying high-voltage AC electrical power from the first inverter to a primary side of a first multi-phase electrical transformer.

The fourth step S4 of the method comprises supplying low-voltage AC electrical power from a secondary side of the first multi-phase electrical transformer to a first rectifier circuit.

The fifth step S5 of the method comprises supplying low-voltage DC electrical power from the rectifier circuit to a first low-voltage battery having a plurality of series connected battery cells for charging of the first low-voltage battery,
The sixth step S6 of the method comprises supplying a low-voltage DC electrical power from the first rectifier circuit and/or the first low-voltage battery to at least a first electrical load of the vehicle.

Although these steps S1-S6 are listed with a consecutive order and numbering, all or at least more of these steps S1-S6 are often performed simultaneously in time due to the physical nature of current flowing in an electrical circuit. However, the current flow over time may be controlled by means of additional switches or the like, such that only some parts of the electrical circuit is activated at certain times. In other words, the order of the steps in the method described with reference to the flowchart of figure 17 should not be seen as limiting. It should be appreciated that one or more method steps may be omitted from the method discussed, and that most of the steps may be performed in virtually any order and do not necessarily imply an order as provided. Rather, the methods discussed are merely one embodiment of the present disclosure as contemplated.

The control systems and methods disclosed herein may be implemented in a general purpose computer, a processor, or a processor core. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

The processor associated with the control system or control unit may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

1. Vehicle
2. Vehicle body
3. Wheels
4. First electric motor
5. First high-voltage battery
6. Electrical power supply system
7. First inverter
8. First low-voltage battery
9. High-voltage battery
10. Low-voltage battery
11. Switched-mode DC/DC converter
12. Input of inverter
13. Output of inverter
14. First multi-phase electrical transformer
15. Primary side of first multi-phase electrical transformer
16. Secondary side of first multi-phase electrical transformer
17. First rectifier circuit
18. Series connected battery cells
19. Input side of first rectifier
20. Output side of first rectifier
21. Common housing
22. First low-voltage DC bus
23. Charging inlet
24. Switch
25. HV DC line upstream of first inverter
26. HV AC line downstream of first inverter
27. First switch leg
28. Second switch leg
29. Third switch leg
30. Switch
31. Reverse diode
32. second multi-phase electrical transformer
33. Primary side of second multi-phase electrical transformer
34. Secondary side of second multi-phase electrical transformer
35. Second rectifier circuit
36. Second low-voltage battery
37. Input side of second rectifier
38. Output side of second rectifier
39. Second low-voltage DC bus
40. Second high-voltage battery
41. Plurality of battery cells
42. Second inverter
43. Second electrical motor
44. Output of second inverter
45. Input of second inverter
46. Positive pole of HV battery
47. Negative pole of HV battery
48. First high-voltage output terminal
49. Diode
50. First low-voltage output terminal
51. Positive pole of first low-voltage output terminal
52. Negative pole of first low-voltage output terminal
53. Battery cell of first low-voltage battery
54. Centre point of the first switch leg
55. Centre point of the second switch leg
56. Centre point of the third switch leg
57. First control unit
58. Second low-voltage output terminal
59. Positive pole of second low-voltage output terminal
60. Negative pole of second low-voltage output terminal
61. Second control unit
62. Control lines and/or data communication lines
63. First multi-phase electrical transformer and first rectifier unit
64. Second high-voltage output terminal
65. First phase winding arrangement
66. Second phase winding arrangement
67. Third phase winding arrangement
68. Core
69. Tapping point
70. input connectors
71. output connectors

## Claims

1. An electrical power supply system (6) for an electric vehicle, the electrical power supply system comprising:
a first high-voltage battery (5) having a plurality of series connected battery cells;
a first inverter (7) having an input operatively connected to the first high-voltage battery (5) and an output configured to be connected to a first electric motor (4) of the vehicle;
a first multi-phase electrical transformer (14) having a primary side (15) and a secondary side (16), wherein the primary side (15) is operatively connected to the output of the first inverter (7) and configured to receive multi-phase high-voltage AC electrical power, and wherein the secondary side (16) is configured to output multi-phase low-voltage AC electrical power;
a first rectifier circuit (17) operatively connected to the secondary side (16) of the first multi-phase electrical transformer (14) and configured to output low-voltage DC electrical power; and
a first low-voltage battery (8) having a plurality of series connected battery cells operatively connected to the first rectifier circuit (17) for charging of the first low-voltage battery (8),
wherein the first rectifier circuit (17) and/or the first low-voltage battery (8) are configured to supply low-voltage DC electrical power to at least a first electrical load (L1, L2) of the vehicle.

2. The electrical power supply system (6) according to claim 1, wherein at least the first high-voltage battery (5), the first inverter (7), the first multi-phase electrical transformer (14), the first rectifier circuit (17) and the first low-voltage battery (8) are installed in a common housing (21) to form a single battery pack.

3. The electrical power supply system (6) according to any of the preceding claims, wherein at least the first high-voltage battery (5) and the first low-voltage battery (8) are controlled by the same electronic battery management system (BMS).

4. The electrical power supply system (6) according to any of the preceding claims 2 to 3, wherein the single battery pack includes a first control unit (57) that is configured to control operation of the first inverter (7) and to operate the Battery Management System (BMS) of the first high-voltage battery (5) and of the low-voltage battery (8).

5. The electrical power supply system (6) according to any of the preceding claims, wherein the first multi-phase electric transformer (14) is a passive electrical component, or a controllable transformer having a variable output voltage level.

6. The electrical power supply system (6) according to any of the preceding claims, wherein the electrical system further comprises an on-board charging inlet (23) operably connected to a switch (24) that is connected to a high-voltage DC line (25) upstream of the first inverter (7) and to a high-voltage AC line (26) downstream of the first inverter (7), wherein the switch (24) is arranged to route high-voltage DC electrical power received at the on-board charging inlet (23) to the high-voltage DC line (25) upstream of the first inverter (7) for charging of the first high-voltage battery (5), and wherein the switch (24) is arranged to route high-voltage AC electrical power received at the on-board charging inlet (23) to the high-voltage AC line (26) downstream of the first inverter (7), wherein the first inverter (7) is a bidirectional inverter that can act as a three-phase rectifier for charging the first high-voltage battery (5).

7. The electrical power supply system (6) according to any of the preceding claims, wherein the electrical system further comprises:
a second multi-phase electrical transformer (32) having a primary side (33) and a secondary side (34), wherein the primary side (33) is operatively connected to the output of the first inverter (7) and configured to receive multi-phase high-voltage AC electrical power, and wherein the secondary side (34) is configured to output multi-phase low-voltage AC electrical power;
a second rectifier circuit (35) operatively connected to the secondary side (34) of the second multi-phase electrical transformer (32) and configured to output low-voltage DC electrical power; and
a second low-voltage battery (36) having a plurality of series connected battery cells operatively connected to the second rectifier circuit (35) for charging of the second low-voltage battery (36);
wherein the second rectifier circuit (35) and the second low-voltage battery (36) are configured to supply low-voltage DC electrical power to at least one electrical load (L3, L4) of the vehicle.

8. The electrical power supply system (6) according to any of the preceding claims 1 to 6, wherein the electrical system further comprises:
a second high-voltage battery (40) having a plurality of series connected battery cells;
a second inverter (42) having an input operatively connected to the second high-voltage battery ()40 and an output configured to be connected to a second electric motor (43) of the vehicle;
a second multi-phase electrical transformer (32) having a primary side (33) and a secondary side (34), wherein the primary side (33) is operatively connected to the output of the second inverter (42) and configured to receive multi-phase high-voltage AC electrical power, and wherein the secondary side (34) is configured to output multi-phase low-voltage AC electrical power;
a second rectifier circuit (35) operatively connected to the secondary side (34) of the second multi-phase electrical transformer (32) and configured to output low-voltage DC electrical power; and
a second low-voltage battery (36) having a plurality of series connected battery cells operatively connected to the second rectifier circuit (35) for charging of the second low-voltage battery (36),
wherein the second rectifier circuit (35) and the second low-voltage battery (36) are configured to supply low-voltage DC electrical power to at least a second electrical load (L3, L4) of the vehicle.

9. The electrical power supply system (6) according to any of the preceding claims, wherein the battery chemistry of the battery cells of the first high-voltage (5) is different from the battery chemistry of the battery cells of the first low-voltage battery (8).

10. The electrical power supply system (6) according to any of the preceding claims, wherein the single battery pack comprises a first high-voltage output terminal (48) and a first DC low-voltage output terminal (50).

11. The electrical power supply system (6) according to claim 10, wherein the single battery pack further comprises a second DC low-voltage output terminal (58) that is galvanically isolated from the first DC low-voltage output terminal (50).

12. The electrical power supply system (6) according to any of the preceding claims 10 to 11, wherein the first high-voltage output terminal (48) has at least three line contacts and is configured to supply multiphase high-voltage AC electrical power to a first high-voltage load (4).

13. The electrical power supply system (6) according to any of the preceding claims 10 to 12, wherein the single battery pack further comprises a second high-voltage output terminal (64) having at least three line contacts and being configured to supply multiphase high-voltage AC electrical power to a second high-voltage load (43).

14. A vehicle comprising the electrical power supply system (6) according to any of the preceding claims, a first electric high-voltage motor (4), and a first electrical low-voltage load (L1, L2) of the vehicle, wherein the output of the first inverter (7) is operatively connected to the first electric high-voltage motor (4) of the vehicle, and wherein the first rectifier circuit (17) and/or the first low-voltage battery (8) are operatively connected to the first electrical low-voltage load (L1, L2) of the vehicle.

15. A method for operating an electric vehicle, the method comprising:
supplying high-voltage DC electrical power from a first high-voltage battery (5) having a plurality of series connected battery cells to a first inverter (7);
supplying high-voltage AC electrical power from the first inverter (7) to an electric motor (4) of the vehicle for driving the first electric motor (4);
supplying high-voltage AC electrical power from the first inverter (7) to a primary side (15) of a first multi-phase electrical transformer (14);
supplying low-voltage AC electrical power from a secondary side (16) of the first multi-phase electrical transformer (14) to a first rectifier circuit (17);
supplying low-voltage DC electrical power from the rectifier circuit (17) to a first low-voltage battery (8) having a plurality of series connected battery cells for charging of the first low-voltage battery (8); and
supplying a low-voltage DC electrical power from the first rectifier circuit (17) and/or the first low-voltage battery (8) to at least a first electrical load (L2, L2) of the vehicle.
